Europäisches Patentamt

European Patent Office

Office européen des brevets

(11) Veröffentlichungsnummer: **0 312 690**
**A2**

(12) **EUROPÄISCHE PATENTANMELDUNG**

(21) Anmeldenummer: **88108557.5**

(22) Anmeldetag: **28.05.88**

(51) Int. Cl.⁴: **H04B 7/26 , H04B 7/005**

(30) Priorität: **23.10.87 DE 3736020**

(43) Veröffentlichungstag der Anmeldung:
**26.04.89 Patentblatt 89/17**

(84) Benannte Vertragsstaaten:
**AT CH DE FR IT LI NL SE**

(71) Anmelder: **ROBERT BOSCH GMBH**
**Postfach 50**
**D-7000 Stuttgart 1(DE)**

(72) Erfinder: **Ketterling, Hans-Peter, Dipl.-Ing.**
**Manfred-von-Richthofen-Strasse 11**
**D-1000 Berlin 42(DE)**

(74) Vertreter: **Schmidt, Hans-Ekhardt**
**Robert Bosch GmbH Geschäftsbereich**
**Elektronik Patent- und Lizenzabteilung**
**Forckenbeckstrasse 9-13**
**D-1000 Berlin 33(DE)**

(54) **Funknetz.**

(57) Der Erfindung liegt die Aufgabe zugrunde, bei einem Funknetz mit mobilen und stationären Funksende- und -empfangsstationen, die je einen Auswerter für die jeweilige Empfangsqualität aufweisen, die Gleichkanal-, Nachbarkanal- und Interkanalmodulationsstörungen mit geringerem Aufwand zu reduzieren. Dabei soll auf eine aufwendige zentrale Auswertung bekannter Funknetze verzichtet werden.

Die Aufgabe wird bei einem gattungsgemäßen Funknetz dadurch gelöst, daß jede Funksende- und -empfangsstation (10, 11) die Empfangsqualität bei bestehender Funkverbindung mittels des Auswerters überwacht. Wird ein vorgegebener unterer Grenzwert der Empfangsqualität unterschritten, so wird automatisch die Sendeleistung erhöht; umgekehrt wird bei einer Überschreitung eines vorgegebenen oberen Grenzwertes der Empfangsqualität die Sendeleistung wieder reduziert.

Die Erfindung eignet sich insbesondere für Funknetze mit zellularer Aufteilung des Funkgebietes.

EP 0 312 690 A2

## Funknetz

Die Erfindung betrifft ein Funknetz nach dem Oberbegriff des Anspruchs 1.

### Stand der Technik

Es ist ein Funknetz bekannt (Funkschau, 1986, Heft 2, Seiten 43 ... 48), das in Funkzellen aufgeteilt ist und dessen Mobilstationen der jeweiligen Basisstation die gemessene Empfangsfeldstärke mitteilen, damit diese ihre Sendeleistung an die jeweilige Qualität des Übertragungsweges automatisch anpaßt. Auf diese Weise wird immer eine gewisse Mindestqualität, das heißt ein bestimmter Mindeststörabstand beziehungsweise bei einer Datenübertragung eine möglichst geringe Bitfehlerrate erzielt, ohne daß mehr Sendeleistung aufgebracht wird, als unbedingt nötig ist. Damit werden in Funknetzen mit vielen Funkteilnehmern insbesondere Gleichkanal-, Nachbarkanal- und Interkanalmodulationsstörungen merklich reduziert. Die vorstehend beschriebene Anpassung der Sendeleistung an die jeweils herrschenden Übertragungsverhältnisse kann bei den stationären und/oder den mobilen Funksende- und -empfangsstationen vorgenommen werden.

### Aufgabe

Der Erfindung liegt die Aufgabe zugrunde, bei einem Funknetz nach dem Oberbegriff des Anspruchs 1 die Gleichkanal-, Nachbarkanal- und Interkanalmodulationsstörungen mit geringerem Aufwand zu reduzieren.

### Lösung und erzielbare Vorteile

Die Aufgabe wird bei einem gattungsgemäßen Funknetz durch die kennzeichnenden Merkmale des Anspruchs 1 gelöst.

Die mit der Erfindung erzielten Vorteile bestehen insbesondere darin, daß die genannten Störungen reduziert werden, ohne daß es dazu einer aufwendigen zentralen Auswertung und einer Signalisierung zwischen den Funkstationen bedarf, wie dies beim Nordic Mobile Telephone (NMT) oder beim Netz C der Deutschen Bundespost vorgesehen ist. Ein weiterer wesentlicher Vorteil ergibt sich beim Einsatz von Handsprechfunkgeräten, für die sich die verfügbare Betriebsdauer erhöht, weil der mit einer großen Sendeleistung verbundene Batterieverbrauch nur zu den Zeiten auftritt, in denen eine schlechte Übertragungsqualität festgestellt wird. Ein weiterer Vorteil besteht noch darin, daß eine Nachrüstung beziehungsweise Umrüstung vorhandener stationärer oder mobiler Funksende- und -empfangsstationen möglich ist und daß das beschriebene Verfahren sowohl für öffentliche als auch für nichtöffentliche Netze des beweglichen Funks anwendbar ist.

### Beschreibung eines Ausführungsbeispiels

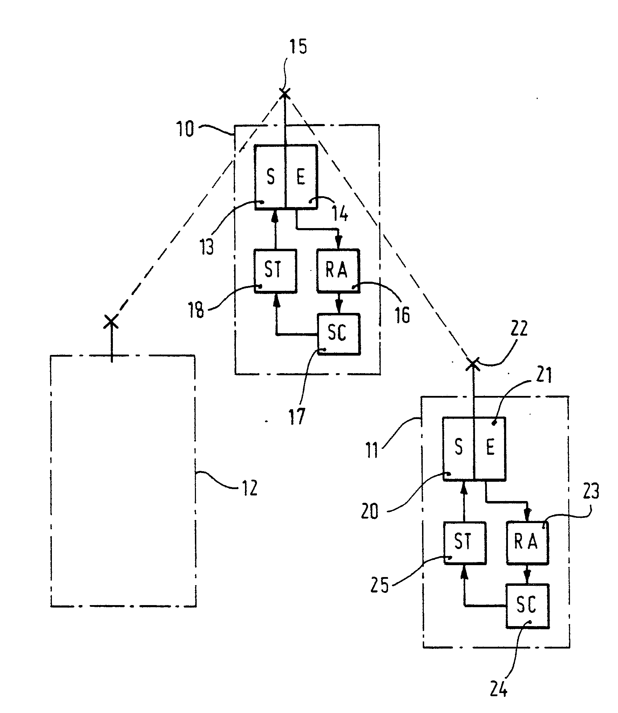

Ein Ausführungsbeispiel der Erfindung ist in der Zeichnung anhand eines Blockschaltbildes dargestellt und wird im folgenden näher erläutert.

In dem Blockschaltbild bezeichnen 10 eine vorzugsweise stationäre Funksende- und -empfangsstation - im folgenden Feststation genannt und 11 und 12 je eine vorzugsweise mobile Funksende- und -empfangsstation - im folgenden Mobilstation genannt. Die Feststation und die Mobilstationen gehören zu einem mehrere dieser Stationen umfassenden Funknetz.

Die Feststation 10 weist ein Sendeteil 13 und ein Empfangsteil 14 sowie eine Sende-Empfangsantenne 15 und einen mit dem Empfangsteil 14 verbundenen Rauschsignalauswerter 16 auf, der über einen Schwellwertschalter 17 und eine Leistungssteuerungsvorrichtung 18 mit dem Sendeteil 13 verbunden ist.

Die Mobilstation 11 hat ebenso wie die Mobilstation 12 den prinzipiell gleichen Aufbau wie die Feststation. Bei der Mobilstation 11 sind das Sendeteil mit 20, das Empfangsteil mit 21, die Sende- und Empfangsantenne mit 22, der Rauschsignalauswerter mit 23, der Schwellwertschalter mit 24 und die Leistungssteuerungsvorrichtung mit 25 bezeichnet.

Die vorstehend beschriebene Feststation 10 und die Mobilstation 11 üben zusätzlich zu den üblichen Funktionen folgende Funktionen aus.

Jede Funkstation überwacht die Empfangsqualität der Funkverbindung mittels Auswertung des Störabstandes beziehungsweise Rauschauswertung durch den Rauschsignalauswerter 16 beziehungsweise 23. Der Rauschsignalauswerter gibt an seinem Ausgang eine Auswertespannung ab, deren Wert von der jeweiligen Empfangsqualität der Funkverbindung abhängt. Unterschreitet zum Beispiel die Auswertespannung bei schlechter Empfangsqualität einen vorgegebenen Mindestwert, auf den der Schwellwertschalter 17 beziehungsweise 24 eingestellt ist, dann gibt dieser eine erste Steuerspannung ab, die die Leistungssteuerungsvorrichtung 18 beziehungsweise 25 veranlaßt, die Sendeleistung des Sendeteils 13 beziehungsweise 20 um einen vorgegebenen Wert zu erhöhen. Verbessert sich danach die Empfangsqualität wieder, so steigt die Auswertespannung an, und bei einem bestimmten, vorgegebenen Höchstwert, auf den der Schwellwertschalter eingestellt ist, gibt dieser dann eine zweite Steuerspannung ab, die die Leistungssteuerungsvorrichtung 18 beziehungsweise 20 veranlaßt, die Sendeleistung des Sendeteils um einen vorgegebenen Wert zu reduzieren. Dabei ist es zweckmäßig, im Rauschsignalauswerter eine geeignete Mittelwertbildung über einen passenden Zeitraum vorzusehen, um Instabilitäten zu vermeiden. Diese Art der Sendeleistungsbeeinflussung hat zur Folge, daß für die betreffende Funkverbindung einerseits eine genügende Qualität der Verbindung garantiert wird, solange sich die Mobilstation innerhalb der Reichweite der Feststation aufhält, und andererseits nicht mehr Sendeleistung als nötig gebraucht wird.

Die vorstehend beschriebene Steuerung der Sendeleistung kann der Fachmann derart ergänzen, daß sie in mehreren Stufen oder auch kontinuierlich erfolgt.

Während beim Simplex-Betrieb der Funkstationen in beiden Übertragungsrichtungen die gleiche Qualität zu erwarten ist - gleiche Sendeleistungen, gleiche Empfindlichkeiten der Empfangsteile 14, 21 und dergleichen vorausgesetzt -, können beim Duplex-Betrieb aufgrund unterschiedlicher Ausbreitungsbedingungen und lokaler Störungen beider Frequenzen unterschiedliche Empfangsqualitäten in den beiden Richtungen auftreten. Auch dann ist aber die erfindungsgemäße Leistungssteuerung anwendbar, sofern die Bemessung der Stufen durch einmalig vorgenommene Versuche ermittelt und eine geeignete zeitliche Mittelwertbildung der Rauschsignalauswertung vorgenommen wird.

Die Überwachung der Empfangsqualität und der Steuerung der Sendeleistung in der Feststation beziehungsweise in den mobilen Stationen kann in dem Fachmann bekannter Weise auch durch andere Vorrichtungen, zum Beispiel durch eine Mikroprozessorschaltung, erfolgen.

## Ansprüche

1. Funknetz mit mobilen und stationären Funksende- und -empfangsstationen, die einen Auswerter zur Ermittlung der jeweiligen Empfangsqualität enthalten, dadurch gekennzeichnet, daß jede Funksende- und -empfangsstation (10, 11) die Empfangsqualität bei bestehender Funkverbindung überwacht und bei Unterschreitung eines vorgegebenen unteren Grenzwertes der Empfangsqualität die Sendeleistung erhöht und bei Überschreitung eines vorgegebenen oberen Grenzwertes reduziert.

2. Funknetz nach Anspruch 1, dadurch gekennzeichnet, daß die Anpassung der Sendeleistung stufenweise oder kontinuierlich erfolgt.

3. Funknetz nach Anspruch 1 oder 2, dadurch gekennzeichnet, daß jede Funksende- und -empfangsstation (10, 1) einen Rauschsignalauswerter (16, 23) enthält, der eine der Empfangsqualität entsprechende Auswertespannung liefert, die einem auf den oberen und unteren Grenzwert eingestellten Schwellwertschalter (17, 24) zugeführt wird.

4. Funknetz nach Anspruch 1 oder 3, dadurch gekennzeichnet, daß aus der Auswertespannung ein Mittelwert über einen vorgegebenen Zeitraum gebildet wird.

5. Funknetz nach Anspruch 1 oder einem der folgenden, dadurch gekennzeichnet, daß für die Auswertung der Empfangsqualität und/oder die Steuerung der Sendeleistung eine Mikroprozessorschaltung vorgesehen ist.

EP 0 312 690 A2